# EUROPEAN PATENT SPECIFICATION

(11) **EP 3 820 233 B1**
(45) Date of publication and mention of the grant of the patent: **06.04.2022**
(21) Application number: 19839993.3
(22) Date of filing: 26.07.2019
(51) Int. Cl.: H04W 74/08

(54) **RANDOM ACCESS METHODS, TERMINAL DEVICE, AND NETWORK DEVICE**
DIREKTZUGRIFFSVERFAHREN, ENDGERÄTEVORRICHTUNG UND NETZWERKVORRICHTUNG
PROCÉDÉS D'ACCÈS ALÉATOIRE, DISPOSITIF TERMINAL ET DISPOSITIF RÉSEAU

(30) Priority: 27.07.2018 CN 201810846902
(43) Date of publication of application: 12.05.2021
(73) Proprietor: GUANGDONG OPPO MOBILE TELECOMMUNICATIONS CORP., LTD., Dongguan Guangdong 523860 (CN)
(72) Inventor: XU, Weijie, Dongguan, Guangdong 523860 (CN)
(74) Representative: Penza, Giancarlo
(86) International application number: PCT/CN2019/097929
(87) International publication number: WO 2020/020352

(56) References cited:
- WO-A1-2017/151187
- WO-A1-2018/127240
- CN-A- 108 271 275
- CN-A- 108 282 901
- ASUSTEK: "Consideration on fallback of 2-step RACH procedure", 3GPP DRAFT; R2-1700358 CONSIDERATION ON FALLBACK OF 2-STEP RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. RAN WG2, no. Spokane, USA; 20170117 - 20170119 17 January 2017 (2017-01-17), XP051210937, Retrieved from the Internet: URL:http://www.3gpp.org/ftp/Meetings_3GPP_ SYNC/RAN2/Docs/ [retrieved on 2017-01-17]
- ERICSSON: "On Two-step Random Access and Random Access Latency", 3GPP DRAFT; R2-1700413 - ON TWO-STEP RANDOM ACCESS AND RANDOM ACCESS LATENCY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Spokane, Wa; 20170117 - 20170119 17 January 2017 (2017-01-17), XP051210992, Retrieved from the Internet: URL:http://www.3gpp.org/ftp/Meetings_3GPP_ SYNC/RAN2/Docs/ [retrieved on 2017-01-17]
- SONY: "2-step RACH to 4-step RACH fallback", 3GPP DRAFT; R2-1700137 2-4-STEP-FALLBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170117 - 20170119 17 January 2017 (2017-01-17), XP051210722, Retrieved from the Internet: URL:http://www.3gpp.org/ftp/Meetings_3GPP_ SYNC/RAN2/Docs/ [retrieved on 2017-01-17]
- HUAWEI ET AL: "Initial access in NR unlicensed", 3GPP DRAFT; R1-1805920, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20180521 - 20180525 20 May 2018 (2018-05-20), XP051441139, Retrieved from the Internet: URL:http://www.3gpp.org/ftp/Meetings%5F3GP P%5FSYNC/RAN1/Docs/ [retrieved on 2018-05-20]
- ERICSSON: "NR two-step random access procedure", 3GPP TSG-RAN WG1 NR adhoc R1-1700300, 10 January 2017 (2017-01-10), XP051202779,

## Description

### Technical Field

Embodiments of the present application relate to a field of communication, and more specifically, to random access methods, a terminal device and a network device.

### Background

In a 5-Generation New Radio (5G NR) system, a random access procedure based on competition may adopt a four-step random access procedure (message 1 (MSG 1) - MSG 4) similar to Long Term Evolution (LTE). However, a requirement for a delay in the 5G NR is high, and a delay of the four-step random access procedure similar to the LTE is large and cannot meet the requirement of the 5G NR.

Related technologies are known from WO2017151187A1.

### Summary

The invention is set out in the appended set of claims. An Embodiment of the present application provides a random access method, a terminal device and a network device. The terminal device sends a preamble sequence and uplink information in MSG 1 and receives a random access response from the network device in MSG 2 in a random access procedure, that is, a two-step random access procedure may be adopted to realize a random access and reduce the delay in the random access procedure. It should be noted that embodiments of the invention are those whose scope is within that of the appended claims, and the implementations disclosed in this disclosure which do not fall under the scope of the appended claims are to be considered as examples for illustration.

In a first aspect, there is provided a random access method, including:
sending, by a terminal device, a first preamble sequence and a first uplink information on a first Physical Random Access Channel (PRACH) resource; and
receiving, by the terminal device, a first Physical Downlink Control Channel (PDCCH) scrambled by a first Random Access Radio Network Temporary Identity (RA-RNTI), and performing a subsequent random access procedure according to a reception situation of the first PDCCH, wherein the first RA-RNTI is obtained according to the first PRACH resource.

In a second aspect, there is provided a random access method, including:
receiving, by a network device, a first preamble sequence and/or a first uplink information sent by a terminal device, on a first PRACH resource; and
performing, by the network device, a subsequent random access procedure according to a reception situation of the first preamble sequence and the first uplink information.

In a third aspect, there is provided a terminal device, for performing the method in the first aspect or various implementations thereof.

Specifically, the terminal device includes modules for performing the method in the first aspect or various implementations thereof.

In a fourth aspect, there is provided a network device, for performing the method in the second aspect or various implementations thereof.

Specifically, the network device includes functional modules for performing the method in the second aspect or various implementations thereof.

In a fifth aspect, there is provided a terminal device, including a processor and a memory. The memory is configured to store a computer program, and the processor is configured to call and run the computer program stored in the memory to perform the method in the first aspect or various implementations thereof.

In a sixth aspect, there is provided a network device, including a processor and a memory. The memory is configured to store a computer program, and the processor is configured to call and run the computer program stored in the memory to perform the method in the second aspect or various implementations thereof.

In a seventh aspect, there is provided a chip, for implementing the method in any one of the first aspect to the second aspect or various implementations thereof. This aspect is not part of the claimed invention.

Specifically, the chip includes a processor configured to call and run a computer program from a memory, enabling a device on which the chip is provided to perform the method in any one of the first aspect to the second aspect or various implementations thereof.

In an eighth aspect, there is provided a computer-readable storage medium configured to store a computer program, wherein the computer program enables a computer to execute the method in any one of the above first aspect to the second aspect or various implementations thereof. This aspect is not part of the claimed invention.

In a ninth aspect, there is provided a computer program product including computer program instructions, wherein the computer program instructions enable a computer to execute the method in any one of the first aspect to the second aspect or in various implementations thereof. This aspect is not part of the claimed invention.

In a tenth aspect, there is provided a computer program, which, when run on a computer, enables the computer to execute the method in any one of the first aspect to the second aspect or various implementations thereof. This aspect is not part of the claimed invention.

According to the above technical solution, in the two-step random access procedure, the terminal device sends the first preamble sequence and the first uplink information on the first PRACH resource in MSG 1 and receives the first PDCCH scrambled by the first RA-RNTI in MSG 2, so that the terminal device may perform the subsequent random access procedure according to the reception situation of the first PDCCH, thereby realizing the two-step random access and reducing the delay in the random access procedure.

Further, in the two-step random access procedure, the network device receives the first preamble sequence and/or the first uplink information on the first PRACH resource in MSG 1, so that the subsequent random access procedure may be performed according to the reception situation of the first preamble sequence and the first uplink information. Further, the two-step random access is realized, and the delay in the random access procedure is reduced.

### Brief Description of Drawings

FIG. 1 is a schematic diagram of an architecture of a communication system provided by an embodiment of the present application.
FIG. 2 is a schematic flow chart of a random access method provided by an embodiment of the present application.
FIG. 3 is a schematic flow chart of another random access method provided an embodiment of the present application.
FIG. 4 is a schematic block diagram of a terminal device provided by an embodiment of the present application.
FIG. 5 is a schematic block diagram of a network device provided by an embodiment of the present application.
FIG. 6 is a schematic block diagram of a communication device provided by an embodiment of the present application.
FIG. 7 is a schematic block diagram of a chip provided by an embodiment of the present application.
FIG. 8 is a schematic block diagram of a communication system provided by an embodiment of the present application.

### Detailed Description

Technical solutions in embodiments of the present application will be described below with reference to drawings in the embodiments of the present application. It is apparent that the embodiments described are just some embodiments of the present application, but not all embodiments of the present application. Based on the embodiments of the present application, all other embodiments achieved by an ordinary skilled in the art without paying an inventive effort are within a protection scope of the present application.

The embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced long term evolution (LTE-A) system, a New Radio (NR) system, an evolution system of the NR system, an LTE-based access to unlicensed spectrum (LTE-U) system, an NR-based access to unlicensed spectrum (NR-U) system, a Universal Mobile Telecommunications System (UMTS), Wireless Local Area Networks (WLAN) system, Wireless Fidelity (WiFi) system, a next generation communication system or other communication systems.

Generally speaking, a traditional communication system supports a limited number of connections and is easy to implement. However, with a development of communication technology, a mobile communication system will not only support traditional communication, but also support, for example, Device to Device (D2D) communication, Machine to Machine (M2M) communication, Machine Type Communication (MTC), and Vehicle to Vehicle (V2V) communication. The embodiments of the present application may also be applied to these communication systems.

Optionally, a communication system in an embodiment of the present application may be applied to a Carrier Aggregation (CA) scenario, a Dual Connectivity (DC) scenario, and a Standalone (SA) network deployment scenario.

Embodiments of the present application do not limit applied frequency spectrums. For example, embodiments of the present application may be applied to both licensed spectrum and unlicensed spectrum.

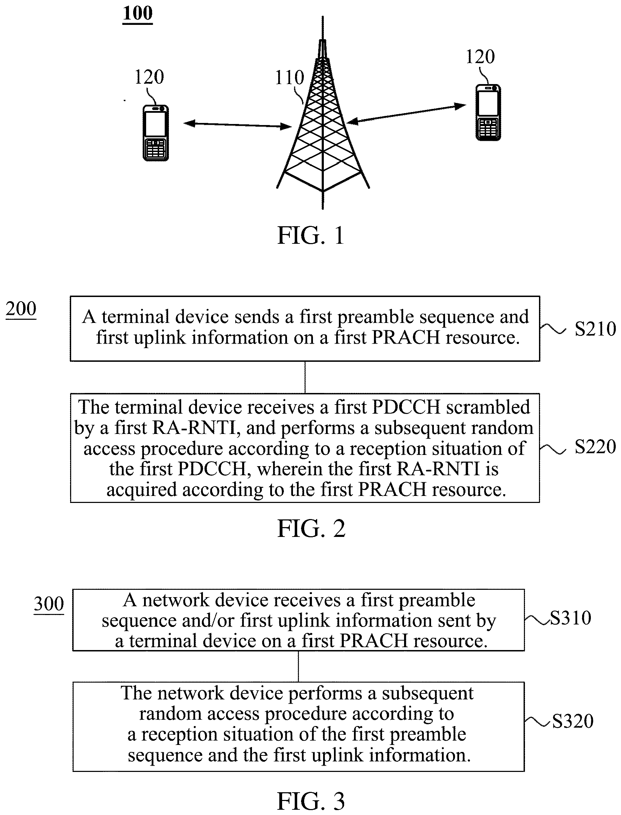

Illustratively, a communication system 100 applied in an embodiment of the present application is shown in FIG. 1. The communication system 100 may include a network device 110, and the network device 110 may be a device that communicates with a terminal device 120 (or referred to as a communication terminal, or a terminal). The network device 110 may provide a communication coverage for a specific geographical area, and may communicate with terminal devices located within the coverage area.

FIG. 1 illustratively shows one network device and two terminal devices. Optionally, the communication system 100 may include multiple network devices, and another number of terminal devices may be included within the coverage area of each network device, this is not limited in embodiments of the present application.

Optionally, the communication system 100 may include other network entities such as a network controller, and a mobile management entity, this is not limited in embodiments of the present application.

It should be understood that, a device with a communication function in a network/system in an embodiment of the present application may be referred to as a communication device. Taking the communication system 100 shown in FIG. 1 as an example, the communication device may include a network device 110 and a terminal device 120 which have a communication function, and the network device 110 and the terminal device 120 may be specific devices described above, which will not be described here again. The communication device may also include other devices in the communication system 100, such as a network controller, a mobile management entity, and other network entities, and this is not restricted in embodiments of the present application.

Various embodiments of the present application are described in combination with the network device and the terminal device, wherein the terminal device may also be referred to as a User Device (UE), an access terminal, a subscriber unit, a subscriber station, a mobile station, a remote station, a remote terminal, a mobile device, a user terminal, a terminal, a wireless communication device, a user agent or a user device, etc. The terminal may be a STATION (ST) in a WLAN, a cellular phone, a cordless phone, a Session Initiation Protocol (SIP) phone, a Wireless Local Loop (WLL) station, a Personal Digital Assistant (PDA) device, a handheld device with a wireless communication function, a computing device or other processing devices connected to a wireless modem, an vehicle-mounted device, a wearable device, and a next generation communication system, such as, a terminal device in an NR network, or a terminal device in a future evolving Public Land Mobile Network (PLMN), etc.

As an example but not a limitation, in an embodiment of the present application, the terminal device may also be a wearable device. The wearable device may also be referred to as wearable smart device, which is a general term for wearable devices intelligently designed and developed for daily wear, such as glasses, gloves, watches, clothing and shoes. The wearable device is a portable device that is worn directly on the body or integrated into clothes or accessories of users. The wearable device is not only a hardware device, but also realize powerful functions through software support, data interaction and cloud interaction. A generalized wearable smart device has a full-function, a large size, may implement complete or partial functions without relying on a smart phone, such as smart watches or smart glasses, etc., or a generalized wearable smart devices only focus on a certain kind of application functions, and needs to be used in conjunction with other devices such as a smart phone, such as various smart bracelets and smart jewelry for monitoring physical signs.

The network device may be a device for communicating with a mobile device, or may be an Access Point (AP) in the WLAN, or a Base Transceiver Station (BTS) in GSM or CDMA, or may be a NodeB (NB) in WCDMA, or an Evolutional Node B (eNB or eNodeB) in Long Term Evolution (LTE), or a relay station or an access point, or an vehicle-mounted device, a wearable device, and a network device (gNB) in the NR network, or a network device in future evolved PLMN network, etc.

In an embodiment of the present application, the network device provides services for a cell, and the terminal device communicates with the network device through transmission resources (e.g., frequency domain resources or spectrum resources) used by the cell. The cell may be a cell corresponding to the network device (e.g., base station), and the cell may include a macro base station or a base station corresponding to a Small cell. The small cells here may include: a Metro cell, a Micro cell, a Pico cell, a Femto cell, etc. These small cells have the characteristics of small coverage and low transmission power, and are suitable for providing high-speed data transmission services.

Optionally, in a 5G NR system, the competition-based random access procedure may adopt a four-step random access procedure (MSG 1-MSG 4) similar to LTE.

In MSG 1, the terminal device sends a random access preamble sequence to the network device.

In MSG 2, after detecting the access preamble sequence sent by the terminal device, the network device sends a random access response (RAR) to the terminal device to inform the terminal device of uplink resource information that may be used when sending MSG3, allocates a Radio Network Temporary Identity (RNTI) to the terminal device, and provides a time advance command to the terminal device. If the terminal device does not detect the RAR within an RAR time window, the terminal device retransmits a PRACH sequence (preamble sequence). If the terminal device detects the RAR within the RAR time window, the terminal device transmits MSG3 according to grant resources indicated by the RAR. An RA-RNTI used by the network device when sending the RAR is calculated according to locations of time-frequency resources of PRACH, and a PDSCH corresponding to a PDCCH scrambled by an RA-RNTI may include responses to multiple preamble sequences.

In MSG 3, after receiving the RAR, the terminal device sends an MSG3 message in an uplink resource designated by the RAR. The step allows Hybrid Automatic Repeat reQuest (HARQ) retransmission.

In MSG 4, the network device sends an MSG4 message including a competition resolution message to the terminal device, and allocates uplink transmission resources for the terminal device. The step allows HARQ retransmission. Upon receiving MSG 4 sent by the network device, the terminal device may detect whether the MSG 4 includes a part of the MSG3 message sent by the terminal device. If the MSG 4 includes a part of the MSG3 message, it indicates that the random access procedure of the terminal device is successful; otherwise, it is considered that the random process failed, and the terminal device needs to start a random access procedure from MSG 1 again.

It should be understood that the four-step random access procedure has a large delay and cannot meet a requirement for the delay in the 5G NR. Therefore, an embodiment of the present application provides a random access method based on a two-step random access procedure, which has a small delay and may meet the requirement for the delay in the 5G NR.

FIG. 2 is a schematic flow chart of a random access method 200 according to an embodiment of the present application. As shown in FIG. 2, the method 200 may include the following contents.

S210, a terminal device sends a first preamble sequence and first uplink information on a first PRACH resource.

Optionally, the first PRACH resource may include a time domain resource, a frequency domain resource and a code domain resource.

Optionally, before initiating the random access, the terminal device may obtain system information, and the system information may indicate associativity between a terminal synchronization signal and the PRACH resource. The terminal device may select an appropriate PRACH resource based on the associativity, thereby initiating the random access.

It should be understood that the first preamble sequence and the first uplink information are sent by the terminal device to the network device to realize the random access.

Herein, the first uplink information may include information for distinguishing terminal devices, such as an identification of the terminal device, RNTI. Optionally, if the first uplink information includes the RNTI, the RNTI may be selected by the terminal device from an RNTI set preconfigured by the network device for two-step RACH transmission.

Optionally, the first uplink information may include the information for distinguishing terminal devices and a category to which an event of triggering Physical Random Access Channel (PRACH) transmission belongs. The event of triggering the PRACH transmission may include following contents.

The terminal device needs to perform an initial access.

Or, after a wireless link fails, the terminal device needs to re-establish an RRC connection.

Or, the terminal device is in an RRC connected state and needs to perform a handover from a serving cell to a target cell.

Or, the terminal device is in the RRC connected state, but uplink synchronization is not realized, then the terminal device sends uplink data or receives downlink data.

Or, the terminal device transits from an RRC inactive state to the RRC connected state.

Or, the terminal device is in the RRC connected state, then a positioning process needs to be performed, but the terminal device does not have TA.

Or, the terminal device requests an Open System Interconnection (OSI) reference model.

Or, the terminal device needs to recover from a Beam failure.

Then, optionally, the terminal device may use multiple bits to indicate the category to which the event of triggering the PRACH transmission belongs. For example, three bits may be used for indicating the category to which the event of triggering the PRACH transmission belongs: "000" indicates that the terminal device needs to perform the initial access, "001" indicates that the terminal device needs to re-establish the RRC connection, "010" indicates that the terminal device needs to perform the cell handover, ..., and "111" indicates that the terminal device needs to recover from the Beam failure.

Optionally, the first uplink information may include the information for distinguishing terminal devices, the category to which the event of triggering the PRACH transmission belongs, and information that also needs to be transmitted for completing this event.

Illustratively, for the initial access of the terminal device, three bits "000" may be used for indicating that the terminal device needs to perform the initial access. In addition, other bits may be used for indicating the information that also needs to be transmitted for completing the initial access, such as an RRC connection request generated by an RRC layer.

Illustratively, for connection re-establishment, 3 bits "001" may be used for indicating that the terminal device needs to re-establish the RRC connection. In addition, other bits may also be used for indicating an RRC connection re-establishment request generated by the RRC layer.

Illustratively, for the cell handover of the terminal device, three bits "010" may be used for indicating that the terminal device needs to perform the cell handover. In addition, other bits may also be used for indicating an RRC handover completion message generated by the RRC layer.

Further, the first uplink information may also include, but is not limited to, a Scheduling Request (SR), a Buffer Status Report (BSR), and service data.

Optionally, in an embodiment of the present application, before the terminal device performs step S210, the terminal device may acquire a first PUCCH resource corresponding to the first PRACH resource.

Specifically, the terminal device may acquire the first PUCCH resource corresponding to the first PRACH resource in following manner.

The terminal device may receive configuration information sent by the network device, wherein the configuration information is used for indicating a correspondence relationship between a preamble sequence group and PUCCH resources; and the terminal device determines the first PUCCH resource according to an identifier of the first preamble sequence group corresponding to the first preamble sequence and the correspondence relationship.

S220, the terminal device receives a first PDCCH scrambled by the first RA-RNTI, and performs a subsequent random access procedure according to a reception situation of the first PDCCH, wherein the first RA-RNTI is acquired according to the first PRACH resource.

Optionally, the first RA-RNTI may be acquired according to at least one of the time domain resource, the frequency domain resource and the code domain resource included in the first PRACH resource.

Optionally, in an embodiment of the present application, the first PDCCH includes first indication information, wherein the first indication information is used for determining whether a first Physical Downlink Shared Channel PDSCH scheduled by the first PDCCH includes a RAR message in a first RAR format.

Optionally, the RAR format includes a first RAR format and a second RAR format, wherein an RAR message in the first RAR format is a response for a preamble sequence and uplink information, and an RAR message in the second RAR format is a response for a preamble sequence.

Optionally, in an embodiment of the present application, the first PDCCH includes the first indication information, wherein the first indication information is used for determining that the first PDSCH scheduled by the first PDCCH includes the RAR message in the first RAR format or the RAR message in the second RAR format.

Optionally, the first PDSCH includes a response for at least one preamble sequence. For example, the first PDSCH includes responses for multiple preamble sequences.

Optionally, the RAR message in the first RAR format includes: part or all of uplink information, a preamble sequence identifier, a timing advance command, an uplink resource allocation, and a temporary RNTI, wherein a preamble sequence identified by the preamble sequence identifier and the uplink information are the first preamble sequence and the first uplink information sent by the terminal device in step S210.

Optionally, the RAR message in the second RAR format includes a preamble sequence identifier, a timing advance command, an uplink resource allocation, and a temporary RNTI.

Optionally, in an embodiment of the present application, the first PDCCH further includes second indication information, which is used for indicating that the terminal device acquires the first PUCCH resource corresponding to the first PRACH resource. For example, the terminal device may receive the configuration information sent by the network device, wherein the configuration information is used for indicating multiple configurations of the correspondence relationship between the preamble sequence group and the PUCCH resource; The terminal device may receive the second indication information, wherein the second indication information is used for indicating which of multiple configuration relationships is used by the terminal device.

It should be noted that the RAR message in the first RAR format is a random access response fed back by a network device in a two-step random access, and the RAR message in the second RAR format is a random access response fed back by a network device in a four-step random access.

Optionally, in an embodiment of the present application, that the terminal device performs the subsequent random access procedure according to the reception situation of the first PDCCH may specifically include at least one of following cases.

Case 1, if the terminal device does not receive the first PDCCH correctly, then the terminal device re-initiates the random access procedure.

It should be noted that the terminal device will receive the first PDCCH only within a first time window, that is, that the terminal device does not receive the first PDCCH correctly may be understood as that the terminal device does not receive the first PDCCH correctly within the first time window.

The first time window may be configured by the network device to the terminal device.

Case 2, if the terminal device receives the first PDCCH correctly but does not receive the first PDSCH correctly, and the first indication information determines that the first PDSCH scheduled by the first PDCCH does not include the RAR message in the first RAR format, then the terminal device re-initiates the random access procedure.

Case 3, if the terminal device receives the first PDCCH correctly but does not receive the first PDSCH correctly, and the first indication information determines that the first PDSCH scheduled by the first PDCCH includes the RAR message in the first RAR format, and if the first PDCCH includes the identifier of the first preamble sequence group, then the terminal device sends Negative Acknowledgement (NACK) information on the first PUCCH resource.

It should be noted that the identifier of the first preamble sequence group is used for identifying the first preamble sequence group at least including the first preamble sequence, and the first preamble sequence group includes at least one preamble sequence. In an extreme case, one preamble sequence corresponds to one PUCCH resource.

Case 4, if the terminal device receives the first PDCCH correctly and does not receive the first PDSCH correctly, and the first indication information determines that the first PDSCH scheduled by the first PDCCH includes the RAR message in the first RAR format, and if the first PDCCH does not include the identifier of the first preamble sequence group, then the terminal device re-initiates the random access procedure.

Case 5, the terminal device receives the first PDCCH correctly but does not receive the first PDSCH correctly, and the first indication information determines that the first PDSCH scheduled by the first PDCCH includes the RAR message in the first RAR format, and the first PDCCH also includes information which may determine that the first PDSCH may include the RAR message for the first preamble sequence and/or the first uplink information, then the terminal device sends NACK information on the first PUCCH resource.

Illustratively, that the first PDCCH also includes information which may determine that the first PDSCH may include the RAR message for the first preamble sequence and/or the first uplink information, may be: the first PDCCH includes the identifier of the first preamble sequence group, and through the first PDCCH, it may be determined that the first PDSCH includes RAR messages for one or more sequences in the first preamble sequence group, and the first preamble sequence belongs to the first preamble sequence group. Therefore, the first PDSCH may include the RAR message for the first preamble sequence. It should be understood that the first PDSCH may not include the RAR message for the first preamble sequence (that is, the first PDSCH may include the RAR message for at least one other preamble sequence in the first preamble sequence group except the first preamble sequence).

Case 6, the terminal device receives the first PDCCH correctly but does not receive the first PDSCH correctly, and the first indication information determines that the first PDSCH scheduled by the first PDCCH includes the RAR message in the first RAR format, and the first PDCCH also includes the information which may determine that the first PDSCH does not include the RAR message for the first preamble sequence and/or the first uplink information, then the terminal device re-initiates the random access procedure.

Case 7, if the terminal device receives the first PDCCH correctly and receives the first PDSCH correctly, and if the first PDSCH does not include the RAR message for the first preamble sequence and/or the first uplink information, then the terminal device re-initiates the random access procedure.

Case 8: if the terminal device receives the first PDCCH correctly and receives the first PDSCH correctly, and if the first PDSCH includes the RAR message for the first preamble sequence, and the RAR message for the first preamble sequence is in the second RAR format, then the terminal device transmits the first PUSCH according to the RAR message for the first preamble sequence.

Case 9, if the terminal device receives the first PDCCH correctly and receives the first PDSCH correctly, and if the first PDSCH includes the RAR message for the first preamble sequence and the first uplink information, and the RAR message for the first preamble sequence and the first uplink information is in the first RAR format, then the terminal device determines that the random access procedure is completed.

It should be understood that in cases 1 to 9 above, that the first indication information determines that the first PDSCH scheduled by the first PDCCH does not include the RAR message in the first RAR format may be understood as that the first indication information determines that the first PDSCH scheduled by the first PDCCH includes the RAR message in the second RAR format.

It should be understood that in case 8 above, it may also be considered that in the two-step random access procedure, when the network device receives the preamble correctly but does not receive the uplink information correctly, the terminal device returns to the four-step random access procedure from the two-step random access procedure after receiving the RAR message sent by the network device.

It should be noted that in cases 1 to 9 above, that the terminal device does not receive the first PDCCH correctly may be understood as that the terminal device does not receive the first PDCCH, or the terminal device receives the first PDCCH but fails to parse the first PDCCH, that is, information contained in the first PDCCH may not be acquired. In a same way, that the terminal device does not receive the first PDSCH correctly may be understood as that the terminal device does not receive the first PDSCH, or the terminal device receives the first PDSCH but fails to parse the first PDSCH, that is, information contained in the first PDSCH may not be acquired. It should be understood that if the terminal device does not receive the first PDCCH correctly, the terminal device may not receive the first PDSCH scheduled by the first PDCCH correctly.

Optionally, in cases 1 to 9 above, the random access procedure re-initiated by the terminal device may be the four-step random access procedure or the two-step random access procedure.

Specifically, the terminal device may send the preamble sequence and the uplink information on a first type of PRACH resource (the two-step random access procedure), or send the preamble sequence on a second type of PRACH resources (the four-step random access procedure).

For example, the terminal device sends a second preamble sequence and second uplink information on a second PRACH resource (the two-step random access procedure), or the terminal device sends a third preamble sequence on a third PRACH resource (the four-step random access procedure).

It should be understood that a delay of the two-step random access procedure is less than that of the four-step random access procedure.

Therefore, in an embodiment of the present application, the terminal device sends the first preamble sequence and the first uplink information on the first PRACH resource in MSG 1, and receives the first PDCCH scrambled by the first RA-RNTI in MSG 2, so that the terminal device may perform the subsequent random access procedure according to the reception situation of the first PDCCH, thereby realizing the two-step random access and reducing the delay in the random access procedure.

FIG. 3 is a schematic flow chart of a random access method 300 according to an embodiment of the present application. As shown in FIG. 3, the method 300 may include following contents.

S310, a network device receives a first preamble sequence and/or first uplink information sent by a terminal device on a first PRACH resource.

Optionally, in an embodiment of the present application, before the network device performs step S310, the network device sends configuration information to the terminal device, wherein the configuration information is used for indicating a correspondence relationship between a preamble sequence group and a PUCCH resource.

S320, the network device performs a subsequent random access procedure according to a reception situation of the first preamble sequence and the first uplink information.

Herein, if the network device receives the first preamble sequence and/or the first uplink information, the network device sends a first PDCCH scrambled by a first RA-RNTI to the terminal device, wherein the first RA-RNTI is acquired according to the first PRACH resource.

Optionally, the first RA-RNTI may be acquired according to at least one of a time domain resource, a frequency domain resource and a code domain resource included in the first PRACH resource.

Optionally, in an embodiment of the present application, the first PDCCH includes first indication information, the first indication information is used for determining whether a first PDSCH scheduled by the first PDCCH includes an RAR message in a first RAR format, wherein the RAR format comprises the first RAR format and the second RAR format, and the RAR message in the first RAR format is a response for the preamble sequence and the uplink information, and the RAR message in the second RAR format is a response for the preamble sequence.

Optionally, in an embodiment of the present application, that the network device performs the subsequent random access procedure according to the reception situations of the first preamble sequence and the first uplink information, may specifically include at least one of the following situations.

Case A, if the network device does not receive the first preamble sequence and the first uplink information correctly, then the network device may not perform any processing.

Case B, if the network device receives the first preamble sequence correctly but does not receive the first uplink information correctly, then the network device sends the first PDCCH scrambled by the first RA-RNTI to the terminal device, and the first indication information included in the first PDCCH determines that the first PDSCH scheduled by the first PDCCH does not include the RAR message in the first RAR format.

It should be understood that in case B above, that the first indication information determines that the first PDSCH scheduled by the first PDCCH does not include the RAR message in the first RAR format, may be understood as that the first indication information determines that the first PDSCH scheduled by the first PDCCH includes the RAR message in the second RAR format.

Case C, if the network device correctly receives the first preamble sequence correctly and receives the first uplink information correctly, then the network device sends the first PDCCH scrambled by the first RA-RNTI to the terminal device, and the first indication information included in the first PDCCH determines that the first PDSCH scheduled by the first PDCCH includes the RAR message in the first RAR format.

Furthermore, in case C above, after the network device transmits the first PDCCH, the network device determines the first PUCCH resource according to the identifier of the first preamble sequence group corresponding to the first preamble sequence and the correspondence relationship, and monitors on the first PUCCH resource whether NACK information exists. Furthermore, if the network device detects NACK information on the first PUCCH resource, the network device retransmits at least an RAR message for the first preamble sequence on a second PDSCH resource.

It should be noted that in cases A to C above, that the network device does not receive the first uplink information correctly may be understood as that the terminal device does not receive the first uplink information or the terminal device receives the first uplink information but fails to parse the first uplink information, that is, information contained in the first uplink information cannot be acquired.

It should be understood that the steps in the random access method 300 may refer to corresponding steps in the random access method 200, which will not be repeated here for brevity.

Therefore, in the two-step random access procedure, the network device receives the first preamble sequence and/or the first uplink information on the first PRACH resource in MSG 1, so that the subsequent random access procedure may be performed according to the reception situation of the first preamble sequence and the first uplink information, thereby realizing the two-step random access and reducing the delay in the random access procedure.

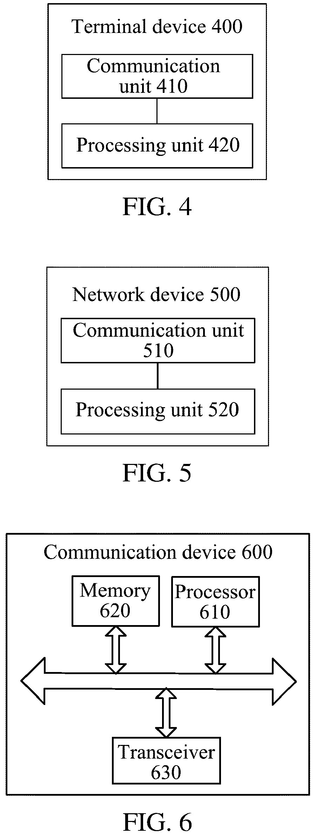

FIG. 4 shows a schematic block diagram of a terminal device 400 according to an embodiment of the present application. As shown in FIG. 4, the terminal device 400 includes: a communication unit 410 and a processing unit 420.

The communication unit 410 is configured to send a first preamble sequence and first uplink information on a first PRACH resource; wherein the communication unit 410 is further configured to receive a first PDCCH scrambled by a first RA-RNTI, wherein the first RA-RNTI is acquired according to the first PRACH resource.

The processing unit 420 is configured to perform a subsequent random access procedure according to a reception situation of the first PDCCH.

Herein, the first PDCCH includes first indication information, wherein the first indication information is used for determining whether a first PDSCH scheduled by the first PDCCH includes an RAR message in a first RAR format, wherein an RAR format includes the first RAR format and a first RAR format, an RAR message in the first RAR format is a response for a preamble sequence and uplink information, and an RAR message in the second RAR format is a response for a preamble sequence.

Optionally, if the communication unit 410 receives the first PDCCH correctly but does not receive the first PDSCH correctly, and the first indication information determines that the first PDSCH scheduled by the first PDCCH does not include the RAR message in the first RAR format, the processing unit 420 is specifically configured to: re-initiate the random access procedure.

Optionally, before the communication unit 410 sends the first preamble sequence and the first uplink information, the processing unit 420 is further configured to acquire a first PUCCH resource corresponding to the first PRACH resource.

Optionally, the processing unit 420 is specifically configured to: control the communication unit 410 to receive configuration information sent by a network device, wherein the configuration information is used for indicating a correspondence relationship between a preamble sequence group and a PUCCH resource; and determine the first PUCCH resource according to an identifier of a first preamble sequence group corresponding to the first preamble sequence and the correspondence relationship.

Optionally, if the communication unit 410 receives the first PDCCH correctly but does not receive the first PDSCH correctly, and the first indication information determines that the first PDSCH scheduled by the first PDCCH includes the RAR message in the first RAR format, the processing unit 420 is specifically configured to: if the first PDCCH includes the identifier of the first preamble sequence group, send negative acknowledgement (NACK) information on the first PUCCH resource; and/or, if the first PDCCH does not include the identifier of the first preamble group, re-initiate the random access procedure.

Optionally, if the communication unit 410 receives the first PDCCH correctly and receives the first PDSCH correctly, the processing unit 420 is specifically configured to: if the first PDSCH does not include an RAR message for the first preamble sequence and/or the first uplink information, re-initiate the random access procedure; and/or, if the first PDSCH includes the RAR message for the first preamble sequence and the RAR message for the first preamble sequence is in the second RAR format, send a first Physical Uplink Shared Channel (PUSCH) according to the RAR message for the first preamble sequence; and/or, if the first PDSCH includes RAR messages for the first preamble sequence and the first uplink information, and the RAR messages for the first preamble sequence and the first uplink information are in the first RAR format, determine that the random access procedure is completed.

Optionally, the processing unit 420 is specifically configured to: if the communication unit 410 does not receive the first PDCCH correctly, re-initiate the random access procedure.

Optionally, the processing unit 420 is specifically configured to: send a second preamble sequence and second uplink information on a second PRACH resource, or send a third preamble sequence on a third PRACH resource.

It should be understood that the terminal device 400 according to an embodiment of the present application may correspond to the terminal device in the method embodiment of the present application, and the above and other operations and/or functions of various units in the terminal device 400 are respectively for implementing corresponding processes of the terminal device in the method 200 shown in FIG. 2, which will not be repeated here for sake of conciseness.

FIG. 5 shows a schematic block diagram of a network device 500 according to an embodiment of the present application. As shown in FIG. 5, the terminal device 500 includes: a communication unit 510 and a processing unit 520.

The communication unit 510 is configured to receive a first preamble sequence and/or first uplink information sent by a terminal device, on a first PRACH resource.

The processing unit 520 is configured to perform a subsequent random access procedure according to a reception situation of the first preamble sequence and the first uplink information.

Herein, if the communication unit 510 receives the first preamble sequence and/or the first uplink information, the communication unit 510 is further configured to send a first PDCCH scrambled by a first RA-RNTI to the terminal device, wherein the first RA-RNTI is acquired according to the first PRACH resource.

Optionally, the first PDCCH includes first indication information, wherein the first indication information is used for determining whether a first PDSCH scheduled by the first PDCCH includes an RAR message in a first RAR format, wherein an RAR format includes the first RAR format and a second RAR format, an RAR message in the first RAR format is a response for a preamble sequence and uplink information, and an RAR message in the second RAR format is a response for a preamble sequence.

Optionally, if the communication unit 510 receives the first preamble sequence correctly but does not receive the first uplink information correctly, the first indication information determines that the first PDSCH scheduled by the first PDCCH does not include the RAR message in the first RAR format.

Optionally, before the communication unit 510 receives the first preamble sequence and/or the first uplink information, the communication unit 510 is further configured to send configuration information to the terminal device, wherein the configuration information is used for indicating a correspondence relationship between a preamble sequence group and a PUCCH resource.

Optionally, if the communication unit 510 receives the first preamble sequence correctly and receives the first uplink information correctly, the first indication information determines that the first PDSCH scheduled by the first PDCCH includes the RAR message in the first RAR format.

Optionally, the processing unit 520 is further configured to determine a first PUCCH resource according to an identifier of the first preamble sequence group corresponding to the first preamble sequence and the correspondence relationship; and the communication unit 510 is further configured to monitor whether there is NACK information on the first PUCCH resource.

Optionally, if the communication unit 510 monitors the NACK information on the first PUCCH resource, the communication unit 510 is further configured to retransmit at least an RAR message for the first preamble sequence on a second PDSCH resource.

Optionally, if the communication unit 510 does not receive the first preamble sequence correctly and the first uplink information correctly, the network device 500 does not perform a processing.

It should be understood that the network device 500 according to an embodiment of the present application may correspond to the network device in the method embodiments of the present application, and the above and other operations and/or functions of various units in the network device 500 are respectively for implementing corresponding processes of the network device in the method 300 shown in FIG. 3, which will not be repeated here for sake of conciseness.

FIG.6 is a schematic diagram of structure of a communication device 600 provided by an embodiment of the present application. A communication device 600 shown in FIG. 6 includes a processor 610. The processor 610 may call and run a computer program from a memory to implement the method in an embodiment of the present application.

Optionally, as shown in FIG. 6, the communication device 600 may further include a memory 620. The processor 610 may call and run a computer program from the memory 620 to implement the method in an embodiment of the present application.

The memory 620 may be a separate device independent of the processor 610 or may be integrated in the processor 610.

Optionally, as shown in FIG. 6, the communication device 600 may further include a transceiver 630, and the processor 610 may control the transceiver 630 to communicate with other devices. Specifically, the transceiver 630 may send information or data to other devices or receive information or data sent by other devices.

The transceiver 630 may include a transmitter and a receiver. The transceiver 630 may further include antennas, and the number of antennas may be one or more.

Optionally, the communication device 600 may be specifically a network device of an embodiment of the present application, and the communication device 600 may implement corresponding procedures implemented by the network device in various methods of embodiments of the present application, and this will not be repeated here for brevity.

Optionally, the communication device 600 may be specifically a mobile terminal/terminal device of an embodiment of the present application, and the communication device 600 may implement corresponding procedures implemented by the mobile terminal/terminal device in various methods of embodiments of the present application, and this will not be repeated here for brevity.

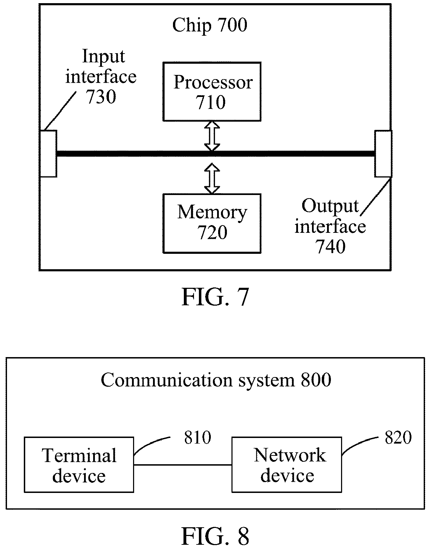

FIG. 7 is a schematic diagram of a structure of a chip of an embodiment of the present application. A chip 700 shown in FIG. 7 includes a processor 710. The processor 710 may call and run a computer program from a memory to implement the method in an embodiment of the present application. This embodiment is not part of the claimed invention.

Optionally, as shown in FIG. 7, the chip 700 may further include a memory 720. The processor 710 may call and run a computer program from the memory 720 to implement the method in an embodiment of the present application.

The memory 720 may be a separate device independent of the processor 710 or may be integrated in the processor 710.

Optionally, the chip 700 may further include an input interface 730. The processor 710 may control the input interface 730 to communicate with other devices or chips. Specifically, the processor 710 may acquire information or data sent by other devices or chips.

Optionally, the chip 700 may further include an output interface 740. The processor 710 may control the output interface 740 to communicate with other devices or chips. Specifically, the processor 710 may output information or data to other devices or chips.

Optionally, the chip may be applied in a network device of an embodiment of the present application, and the chip may implement the corresponding procedures implemented by the network device in various methods of embodiments of the present application, and this will not be repeated here for brevity.

Optionally, the chip may be applied in a mobile terminal/terminal device of an embodiment of the present application, and the chip may implement the corresponding procedures implemented by the mobile terminal/terminal device in various methods of embodiments of the present application, and this will not be repeated here for brevity.

It should be understood that the chip mentioned in an embodiment of the present application may be referred to as a system-level chip, a system chip, a chip system or a system-on-chip, etc.

FIG. 8 is a schematic block diagram of a communication system 800 provided by an embodiment of the present application. As shown in FIG. 8, the communication system 800 may include a terminal device 810 and a network device 820. This embodiment is not part of the claimed invention.

The terminal device 810 may be configured to implement corresponding functions implemented by a terminal device in the above method, and the network device 820 may be configured to implement corresponding functions implemented by a network device in the above method, and this will not be repeated here for brevity.

It should be understood that, the processor of an embodiment of the present application may be an integrated circuit chip having a signal processing capability. In an implementation process, the steps of the above method embodiments may be implemented by using an integrated logic circuit of hardware in the processor or instructions in a form of software. The processor may be a general purpose processor, a Digital Signal Processor (DSP), an Application Specific Integrated Circuit (ASIC), a Field Programmable Gate Array (FPGA) or other programmable logic devices, a discrete gate or a transistor logic device, or a discrete hardware component. Methods, steps and logical block diagrams disclosed in an embodiment of the present application may be implemented or performed. The general purpose processor may be a microprocessor, or the processor may be any conventional processor, etc. The steps of the method disclosed with reference to an embodiment of the present application may be directly embodied as to be implemented by a hardware decoding processor, or may be implemented by a combination of hardware and software modules in the decoding processor. The software modules may be located in a storage medium commonly used in the art, such as a random access memory, a flash memory, a read-only memory, a programmable read-only memory or an electrically erasable programmable memory, or a register. The storage medium is located in a memory, and the processor reads the information in the memory and completes the steps of the above method in combination with its hardware.

It may be understood that, the memory in an embodiment of the present application may be a volatile memory or a non-volatile memory, or may include both a volatile memory and a non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), and is used as an external cache. Through illustrative but not limitative description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). That is to say, the memory in the systems and methods described in this document is intended to include, but is not limited to, these and any other suitable type of memory.

It should be understood that, the above memory is illustrative but not limitative description. For example, the memory in embodiments of the present application may be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Direct Rambus RAM (DR RAM), etc. That is to say, the memory in embodiments of the present application is intended to include, but is not limited to, these and any other suitable type of memory.

An embodiment of the present application further provides a computer readable storage medium configured to store a computer program.

Optionally, the computer readable storage medium may be applied in a network device of an embodiment of the present application, and the computer program enables the computer to perform the corresponding procedures implemented by the network device in various methods of embodiments of the present application, and this will not be repeated here for brevity.

Optionally, the computer readable storage medium may be applied in a mobile terminal/terminal device of an embodiment of the present application, and the computer program enables the computer to perform corresponding processes implemented by the mobile terminal/terminal device in various methods of embodiments of the present application, and this will not be repeated here for brevity.

An embodiment of the present application also provides a computer program product including computer program instructions. This embodiment is not part of the claimed invention.

Optionally, the computer program product may be applied in a network device of an embodiment of the present application, and the computer program instructions enable the computer to perform corresponding processes implemented by the network device in various methods of embodiments of the present application, and this will not be repeated here for brevity.

Optionally, the computer program product may be applied in a mobile terminal/terminal device of an embodiment of the present application, and the computer program instructions enable the computer to perform corresponding processes implemented by the mobile terminal/terminal device in various methods of embodiments of the present application, and this will not be repeated here for brevity.

An embodiment of the present application also provides a computer program.

Optionally, the computer program may be applied in a network device in an embodiment of the present application. When the computer program is run on a computer, the computer is enabled to perform corresponding processes implemented by the network device in various methods of embodiments of the present application, and this will not be repeated here for brevity.

Optionally, the computer program may be applied in a mobile terminal/terminal device in an embodiment of the present application. When the computer program is run on a computer, the computer is enabled to perform corresponding processes implemented by the mobile terminal/terminal device in various methods of embodiments of the present application, and this will not be repeated here for brevity.

Those ordinary skilled in the art may recognize that the exemplary elements and algorithm steps described in combination with the embodiments disclosed herein may be implemented in electronic hardware, or a combination of computer software and the electronic hardware. Whether these functions are implemented in hardware or software depends on the specific application and design constraints of the technical solution. Skilled artisans may use different methods to implement described functions for each particular application, but such implementation should not be considered to be beyond a scope of the present application.

Those skilled in the art may clearly understand that for convenience and conciseness of description, the specific working processes of the systems, apparatuses and units described above may refer to corresponding processes in the method embodiments, and this will not be described here.

In several embodiments provided by the present application, it should be understood that the disclosed systems, apparatuses and methods may be implemented in other ways. For example, the apparatus embodiments described above are only illustrative, for example, the division of the units is only a logical function division, and there may be other division manners in actual implementation. For example, multiple units or components may be combined or integrated into another system, or some features may be ignored or not executed. On the other hand, the mutual coupling or direct coupling or communication connection shown or discussed may be indirect coupling or communication connection between apparatuses or units through some interfaces, and may be in electrical, mechanical or other forms.

The unit described as a separate component may or may not be physically separated, and the component shown as a unit may or may not be a physical unit, i.e., it may be located in one place or may be distributed over multiple network units. Some or all of the units may be selected according to actual needs to achieve the purpose of the embodiments.

In addition, various functional units in various embodiments of the present application may be integrated in one processing unit, or the various units may be physically present separately, or two or more units may be integrated in one unit.

The functions may be stored in a computer readable storage medium if realized in a form of software functional units and sold or used as a separate product. Based on this understanding, the technical solution of the present application, in essence, or the part contributing to the prior art, or the part of the technical solution, may be embodied in the form of a software product stored in a storage medium, including a number of instructions for causing a computer device (which may be a personal computer, a server, or a network device and the like) to perform all or part of the acts of the method described in various embodiments of the present application. The foregoing storage medium includes: any medium that may store program code, such as a USB flash drive, a removable hard disk, a Read-Only Memory (ROM), a Random Access Memory (RAM), a magnetic disk, or an optical disc.

## Claims

1. A random access method, comprising:
sending, by a terminal device, a first preamble sequence and first uplink information on a first physical random access channel, PRACH, resource (S210); and
receiving, by the terminal device, a first physical downlink control channel, PDCCH, scrambled by a first random access wireless network temporary identifier, RA-RNTI, and performing a subsequent random access procedure according to a reception situation of the first PDCCH, wherein the first RA-RNTI is acquired according to the first PRACH resource (S220); **characterized in that**, the first PDCCH comprises first indication information, the first indication information is used for determining whether a first physical downlink shared channel, PDSCH, scheduled by the first PDCCH comprises a random access response, RAR, message in a first RAR format, an RAR format comprises the first RAR format and a second RAR format, an RAR message in the first RAR format is a response for a preamble sequence and uplink information, and an RAR message in the second RAR format is a response for a preamble sequence.

2. The method of claim 1, wherein if the terminal device receives the first PDCCH correctly but does not receive the first PDSCH correctly, and the first indication information determines that the first PDSCH scheduled by the first PDCCH does not comprise the RAR message in the first RAR format,
performing, by the terminal device, the subsequent random access procedure according to the reception situation of the first PDCCH comprises:
re-initiating, by the terminal device, a random access procedure;
or,
if the terminal device receives the first PDCCH correctly but does not receive the first PDSCH correctly, and the first indication information determines that the first PDSCH scheduled by the first PDCCH comprises the RAR message in the first RAR format,
performing, by the terminal device, the subsequent random access procedure according to the reception situation of the first PDCCH comprises:
if the first PDCCH comprises the identifier of the first preamble sequence group, sending, by the terminal device, negative acknowledgement, NACK, information on the first PUCCH resource; and/or,
if the first PDCCH does not comprise the identifier of the first preamble sequence group, re-initiating, by the terminal device, a random access procedure.

3. The method of claim 1 or 2, wherein before sending, by the terminal device, the first preamble sequence and the first uplink information (S210), the method further comprises:
acquiring, by the terminal device, a first physical uplink control channel, PUCCH, resource corresponding to the first PRACH resource,
wherein acquiring, by the terminal device, the first PUCCH resource corresponding to the first PRACH resource comprises:
receiving, by the terminal device, configuration information sent by a network device, wherein the configuration information is used for indicating a correspondence relationship between a preamble sequence group and a PUCCH resource; and
determining, by the terminal device, the first PUCCH resource according to an identifier of a first preamble sequence group corresponding to the first preamble sequence and the correspondence relationship.

4. The method of any one of claims 1 to 3, wherein if the terminal device receives the first PDCCH correctly and receives the first PDSCH correctly,
performing, by the terminal device, the subsequent random access procedure according to the reception situation of the first PDCCH comprises:
if the first PDSCH does not comprise an RAR message for the first preamble sequence and/or the first uplink information, re-initiating, by the terminal device, a random access procedure; and/or,
if the first PDSCH comprises the RAR message for the first preamble sequence and the RAR message for the first preamble sequence is in the second RAR format, transmitting, by the terminal device, a first physical uplink shared channel, PUSCH, according to the RAR message for the first preamble sequence; and/or,
if the first PDSCH comprises the RAR message for the first preamble sequence and the first uplink information, and the RAR messages for the first preamble sequence and the first uplink information are in the first RAR format, the random access procedure being completed.

5. The method of any one of claims 1 to 4, wherein performing, by the terminal device, the subsequent random access procedure according to the reception situation of the first PDCCH comprises: if the terminal device does not receive the first PDCCH correctly, re-initiating, by the terminal device, a random access procedure.

6. The method of claim 2, 4 or 5, wherein re-initiating, by the terminal device, the random access procedure comprises: sending, by the terminal device, a second preamble sequence and second uplink information on a second PRACH resource, or sending, by the terminal device, a third preamble sequence on a third PRACH resource.

7. A random access method, comprising:
receiving, by a network device, a first preamble sequence and/or first uplink information sent by a terminal device, on a first physical random access channel, PRACH, resource (S310); and
performing, by the network device, a subsequent random access procedure according to a reception situation of the first preamble sequence and the first uplink information (S320);
wherein if the network device receives the first preamble sequence and/or the first uplink information, the method further comprises:
sending, by the network device, a first physical downlink control channel, PDCCH, scrambled by a first random access radio network temporary identifier, RA-RNTI, to the terminal device, wherein the first RA-RNTI is acquired according to the first PRACH resource, **characterized in that**
the first PDCCH comprises first indication information, the first indication information is used for determining whether a first physical downlink shared channel, PDSCH, scheduled by the first PDCCH comprises a random access response, RAR, message in a first RAR format, wherein an RAR format comprises the first RAR format and a second RAR format, an RAR message in the first RAR format is a response for a preamble sequence and uplink information, and an RAR message in the second RAR format is a response for a preamble sequence.

8. The method of claim 7, wherein if the network device receives the first preamble sequence correctly but does not receive the first uplink information correctly, the first indication information determines that the first PDSCH scheduled by the first PDCCH does not comprise the RAR message in the first RAR format,
or,
if the network device receives the first preamble sequence correctly and receives the first uplink information correctly, the first indication information determines that the first PDSCH scheduled by the first PDCCH comprises the RAR message in the first RAR format.

9. The method of claim 7, wherein before receiving, by the network device, the first preamble sequence and/or the first uplink information (S310), the method further comprises:
sending, by the network device, configuration information to the terminal device, wherein the configuration information is used for indicating a correspondence relationship between a preamble sequence group and a physical uplink control channel, PUCCH, resource.

10. The method of claim 8, further comprising:
determining, by the network device, a first PUCCH resource according to an identifier of a first preamble sequence group corresponding to the first preamble sequence and the correspondence relationship; and
monitoring on the first PUCCH resource, by the network device, whether there is negative acknowledgement, NACK, information,
wherein if the network device monitors the NACK information on the first PUCCH resource, the method further comprises:
retransmitting, by the network device, at least an RAR message for the first preamble sequence on a second PDSCH resource.

11. The method of any one of claims 7 to 10, wherein if the network device does not receive the first preamble sequence and the first uplink information correctly, the network device does no processing.

12. A terminal device (400), comprising:
a communication unit (410), configured to send a first preamble sequence and first uplink information on a first physical random access channel, PRACH, resource, wherein the communication unit (410) is further configured to receive a first physical downlink control channel, PDCCH, scrambled by a first random access radio network temporary identifier, RA-RNTI, and the first RA-RNTI is acquired according to a first PRACH resource; and
a processing unit (420), configured to perform a subsequent random access procedure according to a reception situation of the first PDCCH,
**characterized in that**, the first PDCCH comprises first indication information, the first indication information is used for determining whether a first physical downlink shared channel, PDSCH, scheduled by the first PDCCH comprises an random access response, RAR, message in a first RAR format, an RAR format comprises the first RAR format and a second RAR format, an RAR message in the first RAR format is a response for a preamble sequence and uplink information, and an RAR message in the second RAR format is a response for a preamble sequence.

13. The terminal device of claim 12, wherein if the communication unit (410) receives the first PDCCH correctly but does not receive the first PDSCH correctly, and the first indication information determines that the first PDSCH scheduled by the first PDCCH does not comprise the RAR message in the first RAR format,
the processing unit (420) is specifically configured to re-initiate a random access procedure,
or,
if the communication unit (410) receives the first PDCCH correctly but does not receive the first PDSCH correctly, and the first indication information determines that the first PDSCH scheduled by the first PDCCH comprises the RAR message in the first RAR format,
the processing unit (420) is specifically configured to:
if the first PDCCH comprises the identifier of the first preamble sequence group, send negative acknowledgement, NACK, information on the first PUCCH resource; and/or,
if the first PDCCH does not comprise the identifier of the first preamble group, re-initiate a random access procedure.

14. The terminal device of claim 12 or 13, wherein if the communication unit (410) receives the first PDCCH correctly and receives the first PDSCH correctly,
the processing unit (420) is specifically configured to:
if the first PDSCH does not comprise an RAR message for the first preamble sequence and/or the first uplink information, re-initiate a random access procedure; and/or,
if the first PDSCH comprises the RAR message for the first preamble sequence and the RAR message for the first preamble sequence is in the second RAR format, transmit a first physical uplink shared channel, PUSCH, according to the RAR message for the first preamble sequence; and/or,
if the first PDSCH comprises the RAR message for the first preamble sequence and the first uplink information, and the RAR message for the first preamble sequence and the first uplink information is in the first RAR format, determine that the random access procedure is completed.

15. The terminal device of any one of claims 12 to 14, wherein the processing unit (420) is specifically configured to:
if the communication unit (410) does not receive the first PDCCH correctly, re-initiate a random access procedure.

16. A network device (500), comprising:
a communication unit (510), configured to receive a first preamble sequence and/or first uplink information sent by a terminal device, on a first physical random access channel, PRACH, resource; and
a processing unit (520), configured to perform a subsequent random access procedure according to a reception situation of the first preamble sequence and the first uplink information; wherein if the communication unit (510) receives the first preamble sequence and/or the first uplink information, the communication unit (510) is further configured to send a first physical downlink control channel, PDCCH, scrambled by a first random access radio network temporary identifier, RA-RNTI, to the terminal device, wherein the first RA-RNTI is acquired according to the first PRACH resource, **characterized in that**
the first PDCCH comprises first indication information, the first indication information is used for determining whether a first physical downlink shared channel, PDSCH, scheduled by the first PDCCH comprises a random access response, RAR, message in a first RAR format, an RAR format comprises the first RAR format and a second RAR format, an RAR message in the first RAR format is a response for a preamble sequence and uplink information, and an RAR message in the second RAR format is a response for a preamble sequence,
wherein before the communication unit (510) receives the first preamble sequence and/or the first uplink information, the communication unit (510) is further configured to send configuration information to the terminal device, wherein the configuration information is used for indicating a correspondence relationship between a preamble sequence group and a physical uplink control channel, PUCCH, resource.

17. The network device of claim 16, wherein if the communication unit (510) receives the first preamble sequence correctly but does not receive the first uplink information correctly, the first indication information determines that the first PDSCH scheduled by the first PDCCH does not comprise the RAR message in the first RAR format,
or,
if the communication unit (510) receives the first preamble sequence correctly and receives the first uplink information correctly, the first indication information determines that the first PDSCH scheduled by the first PDCCH comprises the RAR message in the first RAR format.

## Patentansprüche

1. Direktzugriffsverfahren, umfassend:
Senden, von einer Endgerätevorrichtung, einer ersten Präambelsequenz und von ersten Uplink-Informationen auf einer ersten physischen Direktzugriffskanalressource (Physical Random Access Channel resource, PRACH-Ressource) (S210); und
Empfangen, in der Endgerätevorrichtung, eines ersten physischen Downlink-Steuerkanals (Physical Downlink Control Channel, PDCCH), der durch eine erste vorläufige Kennung eines ersten drahtlosen Direktzugriffsnetzwerks (Random Access Wireless Network Temporary Identifier, RA-RNTI) verschlüsselt wird und Durchführen eines nachfolgenden Direktzugriffsprozesses gemäß einer Empfangssituation des ersten PDCCH, wobei die erste RA-RNTI gemäß der ersten PRACH-Ressource erhalten wird (S220); **dadurch gekennzeichnet, dass** der erste PDCCH erste Anzeigeinformationen umfasst, wobei die ersten Anzeigeinformationen verwendet werden, um zu bestimmen, ob ein erster physischer gemeinsam genutzter Downlink-Kanal (Physical Downlink Shared Channel, PDSCH), der von dem ersten PDCCH geplant wird, eine Direktzugriffsantwortnachricht (Random Access Response message, RAR-Nachricht) in einem ersten RAR-Format umfasst, wobei ein RAR-Format das erste RAR-Format und ein zweites RAR-Format umfasst, wobei eine RAR-Nachricht in dem ersten RAR-Format eine Antwort für eine Präambelsequenz und die Uplink-Informationen ist, und wobei eine RAR-Nachricht in dem zweiten RAR-Format eine Antwort für eine Präambelsequenz ist.

2. Verfahren nach Anspruch 1, wobei, wenn die Endgerätevorrichtung den ersten PDCCH korrekt empfängt, aber den ersten PDSCH nicht korrekt empfängt, und wenn die ersten Anzeigeinformationen bestimmen, dass der erste PDSCH, der durch den ersten PDCCH geplant wird, die RAR-Nachricht in dem ersten RAR-Format nicht umfasst,
ein Durchführen, durch die Endgerätevorrichtung, des nachfolgenden Direktzugriffsprozesses gemäß der Empfangssituation des ersten PDCCH Folgendes umfasst:
erneutes Initiieren, durch die Endgerätevorrichtung, eines Direktzugriffsprozesses;
oder,
wenn die Endgerätevorrichtung den ersten PDCCH korrekt empfängt, aber den ersten PDSCH nicht korrekt empfängt, und wenn die ersten Anzeigeinformationen bestimmen, dass der erste PDSCH, der durch den ersten PDCCH geplant wird, die RAR-Nachricht in dem ersten RAR-Format umfasst,
ein Durchführen, durch die Endgerätevorrichtung, des nachfolgenden Direktzugriffsprozesses gemäß der Empfangssituation des ersten PDCCH Folgendes umfasst:
wenn der erste PDCCH die Kennung der ersten Präambelsequenzgruppe umfasst, Senden, von der ersten Endgerätevorrichtung, von negativen Bestätigungsinformationen (Negative Acknowledgement information, NACK-Informationen) auf der ersten PUCCH-Ressource; und/oder,
wenn der erste PDCCH die Kennung der ersten Präambelsequenzgruppe nicht umfasst, erneutes Initiieren, durch die Endgerätevorrichtung, eines Direktzugriffsprozesses.

3. Verfahren nach Anspruch 1 oder 2, wobei das Verfahren vor dem Senden, von der Endgerätevorrichtung, der ersten Präambelsequenz und der ersten Uplink-Informationen (S210) ferner Folgendes umfasst:
Erhalten, durch die Endgerätevorrichtung, einer ersten physischen Uplink-Steuerkanalressource (Physical Uplink Control Channel resource, PUCCH-Ressource), die der ersten PRACH-Ressource entspricht,
wobei das Erhalten, durch die Endgerätevorrichtung, der ersten PUCCH-Ressource, die der ersten PRACH-Ressource entspricht, Folgendes umfasst:
Empfangen, in der Endgerätevorrichtung, von Konfigurationsinformationen, die von einer Netzwerkvorrichtung gesendet werden, wobei die Konfigurationsinformationen verwendet werden, um eine Entsprechungsbeziehung zwischen einer Präambelsequenzgruppe und einer PUCCH-Ressource anzuzeigen; und
Bestimmen, durch die Endgerätevorrichtung, der ersten PUCCH-Ressource gemäß einer Kennung einer ersten Präambelsequenzgruppe, die der ersten Präambelsequenz und der Entsprechungsbeziehung entspricht.

4. Verfahren nach einem der Ansprüche 1 bis 3, wobei, wenn die Endgerätevorrichtung den ersten PDCCH korrekt empfängt und den ersten PDSCH korrekt empfängt,
ein Durchführen, durch die Endgerätevorrichtung, des nachfolgenden Direktzugriffsprozesses gemäß der Empfangssituation des ersten PDCCH Folgendes umfasst:
wenn der erste PDSCH eine RAR-Nachricht für die erste Präambelsequenz und/oder die ersten Uplink-Informationen nicht umfasst, erneutes Initiieren, durch die Endgerätevorrichtung, eines Direktzugriffsprozesses; und/oder,
wenn der erste PDSCH die RAR-Nachricht für die erste Präambelsequenz umfasst und wenn die RAR-Nachricht für die erste Präambelsequenz in dem zweiten RAR-Format ist, Übertragen, durch die Endgerätevorrichtung, eines ersten physischen gemeinsam genutzten Uplink-Kanals (Physical Uplink Shared Channel, PUSCH) gemäß der RAR-Nachricht für die erste Präambelsequenz; und/oder
wenn der erste PDSCH die RAR-Nachricht für die erste Präambelsequenz und die ersten Uplink-Informationen umfasst und wenn die RAR-Nachrichten für die erste Präambelsequenz und die ersten Uplink-Informationen in dem ersten RAR-Format sind, wird der Direktzugriffsprozess abgeschlossen.

5. Verfahren nach einem der Ansprüche 1 bis 4, wobei das Durchführen, durch die Endgerätevorrichtung, des nachfolgenden Direktzugriffsprozesses gemäß der Empfangssituation des ersten PDCCH Folgendes umfasst:
wenn die Endgerätevorrichtung den ersten PDCCH nicht korrekt empfängt, erneutes Initiieren, durch die Endgerätevorrichtung, eines Direktzugriffsprozesses.

6. Verfahren nach Anspruch 2, 4 oder 5, wobei das erneute Initiieren, durch die Endgerätevorrichtung, des Direktzugriffsprozesses Folgendes umfasst:
Senden, von der Endgerätevorrichtung, einer zweiten Präambelsequenz und von zweiten Uplink-Informationen auf einer zweiten PRACH-Ressource, oder Senden, von der Endgerätevorrichtung, einer dritten Präambelsequenz auf einer dritten PRACH-Ressource.

7. Direktzugriffsverfahren, das Folgendes umfasst:
Empfangen, in einer Netzwerkvorrichtung, einer ersten Präambelsequenz und/oder von ersten Uplink-Informationen, die von einer Endgerätevorrichtung auf einer ersten physischen Direktzugriffskanalressource (Physical Random Access Channel resource, PRACH-Ressource) gesendet werden (S310); und
Durchführen, durch die Netzwerkvorrichtung, eines nachfolgenden Direktzugriffsprozesses gemäß einer Empfangssituation der ersten Präambelsequenz und den ersten Uplink-Informationen (S320);
wobei, wenn die Netzwerkvorrichtung die erste Präambelsequenz und/oder die ersten Uplink-Informationen empfängt, das Verfahren ferner Folgendes umfasst:
Senden eines ersten physischen Downlink-Steuerkanals (Physical Downlink Control Channel, PDCCH), der durch eine erste vorläufige Kennung eines ersten drahtlosen Direktzugriffsnetzwerks (Random Access Wireless Network Temporary Identifier, RA-RNTI) verschlüsselt wird, von der Netzwerkvorrichtung zu der Endgerätevorrichtung, wobei die erste RA-RNTI gemäß der ersten PRACH-Ressource erhalten wird,
**dadurch gekennzeichnet, dass** der erste PDCCH erste Anzeigeinformationen umfasst, wobei die ersten Anzeigeinformationen verwendet werden, um zu bestimmen, ob ein erster physischer gemeinsam genutzter Downlink-Kanal (Physical Downlink Shared Channel, PDSCH), der von dem ersten PDCCH geplant wird, eine Direktzugriffsantwortnachricht (Random Access Response message, RAR-Nachricht) in einem ersten RAR-Format umfasst, wobei ein RAR-Format das erste RAR-Format und ein zweites RAR-Format umfasst, wobei eine RAR-Nachricht in dem ersten RAR-Format eine Antwort für eine Präambelsequenz und die Uplink-Informationen ist, und wobei eine RAR-Nachricht in dem zweiten RAR-Format eine Antwort für eine Präambelsequenz ist.

8. Verfahren nach Anspruch 7, wobei, wenn die Netzwerkvorrichtung die erste Präambelsequenz korrekt empfängt, aber die ersten Uplink-Informationen nicht korrekt empfängt, die ersten Anzeigeinformationen bestimmen, dass der erste PDSCH, der durch den ersten PDCCH geplant wird, die RAR-Nachricht in dem ersten RAR-Format nicht umfasst,
oder,
wenn die Netzwerkvorrichtung die erste Präambelsequenz korrekt empfängt und die ersten Uplink-Informationen korrekt empfängt, die ersten Anzeigeinformationen bestimmen, dass der erste PDSCH, der durch den ersten PDCCH geplant wird, die RAR-Nachricht in dem ersten RAR-Format umfasst.

9. Verfahren nach Anspruch 7, wobei das Verfahren vor dem Empfangen, in der Netzwerkvorrichtung, der ersten Präambelsequenz und/oder der ersten Uplink-Informationen (S210) ferner Folgendes umfasst:
Senden von Konfigurationsinformationen von der Netzwerkvorrichtung zu der Endgerätevorrichtung, wobei die Konfigurationsinformationen verwendet werden, um eine Entsprechungsbeziehung zwischen einer Präambelsequenzgruppe und einer ersten physischen Uplink-Steuerkanalressource (Physical Uplink Control Channel resource, PUCCH-Ressource) anzuzeigen.

10. Verfahren nach Anspruch 8, das ferner Folgendes umfasst:
Bestimmen, durch die Netzwerkvorrichtung, einer ersten PUCCH-Ressource gemäß einer Kennung einer ersten Präambelsequenzgruppe, die der ersten Präambelsequenz und der Entsprechungsbeziehung entspricht; und
Beobachten auf der ersten PUCCH-Ressource, durch die Netzwerkvorrichtung, ob negative Bestätigungsinformationen (Negative Acknowledgement information, NACK-Informationen) vorliegen,
wobei, wenn die Netzwerkvorrichtung die NACK-Informationen auf der ersten PUCCH-Ressource beobachtet, das Verfahren ferner Folgendes umfasst:
erneutes Übertragen, durch die Netzwerkvorrichtung, mindestens einer RAR-Nachricht für die erste Präambelsequenz auf einer zweiten PDSCH-Ressource.

11. Verfahren nach einem der Ansprüche 7 bis 10, wobei, wenn die Netzwerkvorrichtung die erste Präambelsequenz und die ersten Uplink-Informationen nicht korrekt empfängt, die Netzwerkvorrichtung keine Verarbeitung durchführt.

12. Endgerätevorrichtung (400), die Folgendes umfasst:
eine Kommunikationseinheit (410), die konfiguriert ist zum Senden einer ersten Präambelsequenz und von ersten Uplink-Informationen auf einer ersten physischen Direktzugriffskanalressource (Physical Random Access Channel PRACH-Ressource), wobei die Kommunikationseinheit (410) außerdem konfiguriert ist zum Empfangen eines ersten physischen Downlink-Steuerkanals (Physical Downlink Control Channel, PDCCH), der durch eine erste vorläufige Kennung eines ersten drahtlosen Direktzugriffsnetzwerks (Random Access Wireless Network Temporary Identifier, RA-RNTI) verschlüsselt wird, wobei die erste RA-RNTI gemäß der ersten PRACH-Ressource erhalten wird; und
eine Verarbeitungseinheit (420), die konfiguriert ist zum Durchführen eines nachfolgenden Direktzugriffsprozesses gemäß einer Empfangssituation des ersten PDCCH,
**dadurch gekennzeichnet, dass** der erste PDCCH erste Anzeigeinformationen umfasst, wobei die ersten Anzeigeinformationen verwendet werden, um zu bestimmen, ob ein erster physischer gemeinsam genutzter Downlink-Kanal (Physical Downlink Shared Channel, PDSCH), der von dem ersten PDCCH geplant wird, eine Direktzugriffsantwortnachricht (Random Access Response message, RAR-Nachricht) in einem ersten RAR-Format umfasst, wobei ein RAR-Format das erste RAR-Format und ein zweites RAR-Format umfasst, wobei eine RAR-Nachricht in dem ersten RAR-Format eine Antwort für eine Präambelsequenz und die Uplink-Informationen ist, und wobei eine RAR-Nachricht in dem zweiten RAR-Format eine Antwort für eine Präambelsequenz ist.

13. Endgerätevorrichtung nach Anspruch 12, wobei, wenn die Kommunikationseinheit (410) den ersten PDCCH korrekt empfängt, aber den ersten PDSCH nicht korrekt empfängt, und wenn die ersten Anzeigeinformationen bestimmen, dass der erste PDSCH, der durch den ersten PDCCH geplant wird, die RAR-Nachricht in dem ersten RAR-Format nicht umfasst,
die Verarbeitungseinheit (420) insbesondere konfiguriert ist zum erneuten Initiieren eines Direktzugriffsprozesses,
oder,
wenn die Kommunikationseinheit (410) den ersten PDCCH korrekt empfängt, aber den ersten PDSCH nicht korrekt empfängt, und wenn die ersten Anzeigeinformationen bestimmen, dass der erste PDSCH, der durch den ersten PDCCH geplant wird, die RAR-Nachricht in dem ersten RAR-Format umfasst,
die Verarbeitungseinheit (420) insbesondere konfiguriert ist zum:
wenn der erste PDCCH die Kennung der ersten Präambelsequenzgruppe umfasst, Senden von negativen Bestätigungsinformationen (Negative Acknowledgement NACK-Informationen) auf der ersten PUCCH-Ressource; und/oder,
wenn der erste PDCCH die Kennung der ersten Präambelsequenzgruppe nicht umfasst, erneuten Initiieren eines Direktzugriffsprozesses.

14. Endgerätevorrichtung nach Anspruch 12 oder 13, wobei, wenn die Kommunikationseinheit (410) den ersten PDCCH korrekt empfängt und den ersten PDSCH korrekt empfängt,
die Verarbeitungseinheit (420) insbesondere konfiguriert ist zum:
wenn der erste PDSCH eine RAR-Nachricht für die erste Präambelsequenz und/oder die ersten Uplink-Informationen nicht umfasst, erneuten Initiieren eines Direktzugriffsprozesses; und/oder,
wenn der erste PDSCH die RAR-Nachricht für die erste Präambelsequenz umfasst und wenn die RAR-Nachricht für die erste Präambelsequenz in dem zweiten RAR-Format ist, Übertragen eines ersten physischen gemeinsam genutzten Uplink-Kanals (Physical Uplink Shared Channel, PUSCH) gemäß der RAR-Nachricht für die erste Präambelsequenz; und/oder
wenn der erste PDSCH die RAR-Nachricht für die erste Präambelsequenz und die ersten Uplink-Informationen umfasst und wenn die RAR-Nachricht für die erste Präambelsequenz und die ersten Uplink-Informationen in dem ersten RAR-Format ist, Bestimmen, dass der Direktzugriffsprozess abgeschlossen wurde.

15. Endgerätevorrichtung nach einem der Ansprüche 12 bis 14, wobei die Verarbeitungseinheit (420) insbesondere konfiguriert ist zum:
wenn die Kommunikationseinheit (410) den ersten PDCCH nicht korrekt empfängt, erneuten Initiieren eines Direktzugriffsprozesses.

16. Netzwerkvorrichtung (500), umfassend:
eine Kommunikationseinheit (510), die konfiguriert ist zum Empfangen einer ersten Präambelsequenz und/oder von ersten Uplink-Informationen, die von einer Endgerätevorrichtung auf einer ersten physischen Direktzugriffskanalressource (Physical Random Access Channel resource, PRACH-Ressource) gesendet werden; und
eine Verarbeitungseinheit (520), die konfiguriert ist zum Durchführen eines nachfolgenden Direktzugriffsprozesses gemäß einer Empfangssituation der ersten Präambelsequenz und der ersten Uplink-Informationen;
wobei, wenn die Kommunikationseinheit (510) die erste Präambelsequenz und/oder die ersten Uplink-Informationen empfängt, die Kommunikationseinheit (510) außerdem konfiguriert ist zum Senden eines ersten physischen Downlink-Steuerkanals (Physical Downlink Control Channel, PDCCH), der durch eine erste vorläufige Kennung eines ersten drahtlosen Direktzugriffsnetzwerks (Random Access Wireless Network Temporary Identifier, RA-RNTI) verschlüsselt wird, zu der Endgerätevorrichtung, wobei die erste RA-RNTI gemäß der ersten PRACH-Ressource erhalten wird,
**dadurch gekennzeichnet, dass** der erste PDCCH erste Anzeigeinformationen umfasst, wobei die ersten Anzeigeinformationen verwendet werden, um zu bestimmen, ob ein erster physischer gemeinsam genutzter Downlink-Kanal (Physical Downlink Shared Channel, PDSCH), der von dem ersten PDCCH geplant wird, eine Direktzugriffsantwortnachricht (Random Access Response message, RAR-Nachricht) in einem ersten RAR-Format umfasst, wobei ein RAR-Format das erste RAR-Format und ein zweites RAR-Format umfasst, wobei eine RAR-Nachricht in dem ersten RAR-Format eine Antwort für eine Präambelsequenz und die Uplink-Informationen ist, und wobei eine RAR-Nachricht in dem zweiten RAR-Format eine Antwort für eine Präambelsequenz ist,
wobei, bevor die Kommunikationseinheit (510) die erste Präambelsequenz und/oder die ersten Uplink-Informationen empfängt, die Kommunikationseinheit (510) außerdem konfiguriert ist zum Senden von Konfigurationsinformationen zu der Endgerätevorrichtung, wobei die Konfigurationsinformationen verwendet werden, um eine Entsprechungsbeziehung zwischen einer Präambelsequenzgruppe und einer (Physical Uplink Control Channel resource, PUCCH-Ressource) anzuzeigen.

17. Netzwerkvorrichtung nach Anspruch 16, wobei, wenn die Kommunikationseinheit (510) die erste Präambelsequenz korrekt empfängt, aber die ersten Uplink-Informationen nicht korrekt empfängt, die ersten Anzeigeinformationen bestimmen, dass der erste PDSCH, der durch den ersten PDCCH geplant wird, die RAR-Nachricht in dem ersten RAR-Format nicht umfasst,
oder,
wenn die Kommunikationseinheit (510) die erste Präambelsequenz korrekt empfängt und die ersten Uplink-Informationen korrekt empfängt, die ersten Anzeigeinformationen bestimmen, dass der erste PDSCH, der durch den ersten PDCCH geplant wird, die RAR-Nachricht in dem ersten RAR-Format umfasst.

## Revendications

1. Procédé d'accès aléatoire, comprenant :
l'envoi, par un dispositif terminal, d'une première séquence de préambule et de premières informations de liaison montante sur une première ressource de canal d'accès aléatoire physique, PRACH, (S210) ; et
la réception, par le dispositif terminal, d'un premier canal de commande de liaison descendante physique, PDCCH, brouillé par un premier identifiant temporaire de réseau sans fil à accès aléatoire, RA-RNTI, et la réalisation d'une procédure d'accès aléatoire ultérieure en fonction d'une situation de réception du premier PDCCH, le premier RA-RNTI étant acquis en fonction de la première ressource PRACH (S220) ; **caractérisé en ce que**, le premier PDCCH comprend des premières informations d'indication, les premières informations d'indication étant utilisées pour déterminer si un premier canal partagé de liaison descendante physique, PDSCH, planifié par le premier PDCCH comprend un message de réponse d'accès aléatoire, RAR, dans un premier format RAR, un format RAR comprenant le premier format RAR et un second format RAR, un message RAR dans le premier format RAR étant une réponse pour une séquence de préambule et des informations de liaison montante, et un message RAR dans le second format RAR étant une réponse pour une séquence de préambule.

2. Procédé selon la revendication 1, si le dispositif terminal reçoit correctement le premier PDCCH mais ne reçoit pas correctement le premier PDSCH, et que les premières informations d'indication déterminent que le premier PDSCH planifié par le premier PDCCH ne comprend pas le message RAR dans le premier format RAR,
la réalisation, par le dispositif terminal, de la procédure d'accès aléatoire ultérieure en fonction de la situation de réception du premier PDCCH comprenant : la réinitialisation, par le dispositif terminal, d'une procédure d'accès aléatoire ;
ou,
si le dispositif terminal reçoit correctement le premier PDCCH mais ne reçoit pas correctement le premier PDSCH, et que les premières informations d'indication déterminent que le premier PDSCH planifié par le premier PDCCH comprend le message RAR dans le premier format RAR,
la réalisation, par le dispositif terminal, de la procédure d'accès aléatoire ultérieure en fonction de la situation de réception du premier PDCCH comprenant :
si le premier PDCCH comprend l'identifiant du premier groupe de séquences de préambule, l'envoi, par le dispositif terminal, d'informations d'accusé de réception négatif, NACK, sur la première ressource PUCCH ; et/ou,
si le premier PDCCH ne comprend pas l'identifiant du premier groupe de séquences de préambule, la réinitialisation, par le dispositif terminal, d'une procédure d'accès aléatoire.

3. Procédé selon la revendication 1 ou 2, avant d'envoyer, par le dispositif terminal, la première séquence de préambule et les premières informations de liaison montante (S210), le procédé comprenant en outre :
l'acquisition, par le dispositif terminal, d'une première ressource de canal de commande de liaison montante physique, PUCCH, correspondant à la première ressource PRACH, l'acquisition, par le dispositif terminal, de la première ressource PUCCH correspondant à la première ressource PRACH comprenant :
la réception, par le dispositif terminal, d'informations de configuration envoyées par un dispositif de réseau, les informations de configuration étant utilisées pour indiquer une relation de correspondance entre un groupe de séquences de préambule et une ressource PUCCH ; et
la détermination, par le dispositif terminal, de la première ressource PUCCH en fonction d'un identifiant d'un premier groupe de séquences de préambule correspondant à la première séquence de préambule et à la relation de correspondance.

4. Procédé selon l'une quelconque des revendications 1 à 3, si le dispositif terminal reçoit correctement le premier PDCCH et reçoit correctement le premier PDSCH,
la réalisation, par le dispositif terminal, de la procédure d'accès aléatoire ultérieure en fonction de la situation de réception du premier PDCCH comprenant :
si le premier PDSCH ne comprend pas un message RAR pour la première séquence de préambule et/ou les premières informations de liaison montante, la réinitialisation, par le dispositif terminal, d'une procédure d'accès aléatoire ; et/ou,
si le premier PDSCH comprend le message RAR pour la première séquence de préambule et que le message RAR pour la première séquence de préambule est dans le second format RAR, la transmission, par le dispositif terminal, d'un premier canal partagé de liaison montante physique, PUSCH, en fonction du message RAR pour la première séquence de préambule ; et/ou,
si le premier PDSCH comprend le message RAR pour la première séquence de préambule et les premières informations de liaison montante, et si les messages RAR pour la première séquence de préambule et les premières informations de liaison montante sont dans le premier format RAR, la procédure d'accès aléatoire étant terminée.

5. Procédé selon l'une quelconque des revendications 1 à 4, la réalisation, par le dispositif terminal, de la procédure d'accès aléatoire ultérieure en fonction de la situation de réception du premier PDCCH comprenant :
si le dispositif terminal ne reçoit pas correctement le premier PDCCH, la réinitialisation, par le dispositif terminal, d'une procédure d'accès aléatoire.

6. Procédé selon la revendication 2, 4 ou 5, la réinitialisation, par le dispositif terminal, de la procédure d'accès aléatoire comprenant :
l'envoi, par le dispositif terminal, d'une deuxième séquence de préambule et de secondes informations de liaison montante sur une deuxième ressource PRACH, ou l'envoi, par le dispositif terminal, d'une troisième séquence de préambule sur une troisième ressource PRACH.

7. Procédé d'accès aléatoire, comprenant :
la réception, par un dispositif de réseau, d'une première séquence de préambule et/ou de premières informations de liaison montante envoyées par un dispositif terminal, sur une première ressource de canal d'accès aléatoire physique, PRACH (S310) ; et
la réalisation, par le dispositif de réseau, d'une procédure d'accès aléatoire ultérieure en fonction d'une situation de réception de la première séquence de préambule et des premières informations de liaison montante (S320) ; si le dispositif de réseau reçoit la première séquence de préambule et/ou les premières informations de liaison montante, le procédé comprenant en outre :
l'envoi, par le dispositif de réseau, d'un premier canal de commande de liaison descendante physique, PDCCH, brouillé par un premier identifiant temporaire de réseau radio à accès aléatoire, RA-RNTI, au dispositif terminal, le premier RA-RNTI étant acquis en fonction de la première ressource PRACH,
**caractérisé en ce que** le premier PDCCH comprend des premières informations d'indication, les premières informations d'indication étant utilisées pour déterminer si un premier canal partagé de liaison descendante physique, PDSCH, planifié par le premier PDCCH comprend un message de réponse d'accès aléatoire, RAR, dans un premier format RAR, un format RAR comprenant le premier format RAR et un second format RAR, un message RAR dans le premier format RAR étant une réponse pour une séquence de préambule et des informations de liaison montante, et un message RAR dans le second format RAR étant une réponse pour une séquence de préambule.

8. Procédé selon la revendication 7, si le dispositif de réseau reçoit correctement la première séquence de préambule mais ne reçoit pas correctement les premières informations de liaison montante, les premières informations d'indication déterminant que le premier PDSCH planifié par le premier PDCCH ne comprend pas le message RAR dans le premier format RAR,
ou,
si le dispositif de réseau reçoit correctement la première séquence de préambule et reçoit correctement les premières informations de liaison montante, les premières informations d'indication déterminant que le premier PDSCH planifié par le premier PDCCH comprend le message RAR dans le premier format RAR.

9. Procédé selon la revendication 7, avant de recevoir, par le dispositif de réseau, la première séquence de préambule et/ou les premières informations de liaison montante (S310), le procédé comprenant en outre :
l'envoi, par le dispositif de réseau, d'informations de configuration au dispositif terminal, les informations de configuration étant utilisées pour indiquer une relation de correspondance entre un groupe de séquences de préambule et une ressource de canal de commande de liaison montante physique, PUCCH.

10. Procédé selon la revendication 8, comprenant en outre :
la détermination, par le dispositif de réseau, d'une première ressource PUCCH en fonction d'un identifiant d'un premier groupe de séquences de préambule correspondant à la première séquence de préambule et de la relation de correspondance ; et
la surveillance sur la première ressource PUCCH, par le dispositif de réseau, s'il y a des informations d'accusé de réception négatif, NACK,
si le dispositif de réseau surveille les informations NACK sur la première ressource PUCCH, le procédé comprenant en outre :
la retransmission, par le dispositif de réseau, d'au moins un message RAR pour la première séquence de préambule sur une deuxième ressource PDSCH.

11. Procédé selon l'une quelconque des revendications 7 à 10, si le dispositif de réseau ne reçoit pas correctement la première séquence de préambule et les premières informations de liaison montante, le dispositif de réseau ne réalisant aucun traitement.

12. Dispositif terminal (400), comprenant :
une unité de communication (410), configurée pour envoyer une première séquence de préambule et des premières informations de liaison montante sur une première ressource de canal d'accès aléatoire physique, PRACH, l'unité de communication (410) étant en outre configurée pour recevoir un premier canal de commande de liaison descendante physique, PDCCH, brouillé par un premier identifiant temporaire de réseau radio à accès aléatoire, RA-RNTI, et le premier RA-RNTI étant acquis en fonction d'une première ressource PRACH ; et
une unité de traitement (420), configurée pour réaliser une procédure d'accès aléatoire ultérieure en fonction d'une situation de réception du premier PDCCH,
**caractérisé en ce que**, le premier PDCCH comprend des premières informations d'indication, les premières informations d'indication étant utilisées pour déterminer si un premier canal partagé de liaison descendante physique, PDSCH, planifié par le premier PDCCH comprend un message de réponse d'accès aléatoire, RAR, dans un premier format RAR, un format RAR comprenant le premier format RAR et un second format RAR, un message RAR dans le premier format RAR étant une réponse pour une séquence de préambule et des informations de liaison montante, et un message RAR dans le second format RAR étant une réponse pour une séquence de préambule.

13. Dispositif terminal selon la revendication 12, si l'unité de communication (410) reçoit correctement le premier PDCCH mais ne reçoit pas correctement le premier PDSCH, et que les premières informations d'indication déterminent que le premier PDSCH planifié par le premier PDCCH ne comprend pas le message RAR dans le premier format RAR,
l'unité de traitement (420) étant spécifiquement configurée pour réinitialiser une procédure d'accès aléatoire,
ou,
si l'unité de communication (410) reçoit correctement le premier PDCCH mais ne reçoit pas correctement le premier PDSCH, et que les premières informations d'indication déterminent que le premier PDSCH planifié par le premier PDCCH comprend le message RAR dans le premier format RAR,
l'unité de traitement (420) étant spécifiquement configurée pour :
si le premier PDCCH comprend l'identifiant du premier groupe de séquences de préambule, envoyer des informations d'accusé de réception négatif, NACK, sur la première ressource PUCCH ; et/ou,
si le premier PDCCH ne comprend pas l'identifiant du premier groupe de préambule, réinitialiser une procédure d'accès aléatoire.

14. Dispositif terminal selon la revendication 12 ou 13, si l'unité de communication (410) reçoit correctement le premier PDCCH et reçoit correctement le premier PDSCH,
l'unité de traitement (420) étant spécifiquement configurée pour :
si le premier PDSCH ne comprend pas un message RAR pour la première séquence de préambule et/ou les premières informations de liaison montante, réinitialiser une procédure d'accès aléatoire ; et/ou,
si le premier PDSCH comprend le message RAR pour la première séquence de préambule et que le message RAR pour la première séquence de préambule est dans le second format RAR, transmettre un premier canal partagé de liaison montante physique, PUSCH, en fonction du message RAR pour la première séquence de préambule ; et/ou,
si le premier PDSCH comprend le message RAR pour la première séquence de préambule et les premières informations de liaison montante, et si le message RAR pour la première séquence de préambule et les premières informations de liaison montante sont dans le premier format RAR, déterminer que la procédure d'accès aléatoire est terminée.

15. Dispositif terminal selon l'une quelconque des revendications 12 à 14, l'unité de traitement (420) étant spécifiquement configurée pour :
si l'unité de communication (410) ne reçoit pas correctement le premier PDCCH, réinitialiser une procédure d'accès aléatoire.

16. Dispositif de réseau (500), comprenant :
une unité de communication (510), configurée pour recevoir une première séquence de préambule et/ou des premières informations de liaison montante envoyées par un dispositif terminal, sur une première ressource de canal d'accès aléatoire physique, PRACH ; et
une unité de traitement (520), configurée pour réaliser une procédure d'accès aléatoire ultérieure en fonction d'une situation de réception de la première séquence de préambule et des premières informations de liaison montante, si l'unité de communication (510) reçoit la première séquence de préambule et/ou les premières informations de liaison montante, l'unité de communication (510) étant en outre configurée pour envoyer un premier canal de commande de liaison descendante physique, PDCCH, brouillé par un premier identifiant temporaire de réseau radio à accès aléatoire, RA-RNTI, au dispositif terminal, le premier RA-RNTI étant acquis en fonction de la première ressource PRACH,
**caractérisé en ce que** le premier PDCCH comprend des premières informations d'indication, les premières informations d'indication étant utilisées pour déterminer si un premier canal partagé de liaison descendante physique, PDSCH, planifié par le premier PDCCH comprend un message de réponse d'accès aléatoire, RAR, dans un premier format RAR, un format RAR comprenant le premier format RAR et un second format RAR, un message RAR dans le premier format RAR étant une réponse pour une séquence de préambule et des informations de liaison montante, et un message RAR dans le second format RAR étant une réponse pour une séquence de préambule,
avant que l'unité de communication (510) ne reçoive la première séquence de préambule et/ou les premières informations de liaison montante, l'unité de communication (510) étant en outre configurée pour envoyer des informations de configuration au dispositif terminal, les informations de configuration étant utilisées pour indiquer une relation de correspondance entre un groupe de séquences de préambule et une ressource de canal de commande de liaison montante physique, PUCCH.

17. Dispositif de réseau selon la revendication 16, si l'unité de communication (510) reçoit correctement la première séquence de préambule mais ne reçoit pas correctement les premières informations de liaison montante, les premières informations d'indication déterminant que le premier PDSCH planifié par le premier PDCCH ne comprend pas le message RAR dans le premier format RAR,
ou,
si l'unité de communication (510) reçoit correctement la première séquence de préambule et reçoit correctement les premières informations de liaison montante, les premières informations d'indication déterminant que le premier PDSCH planifié par le premier PDCCH comprend le message RAR dans le premier format RAR.
